(19) Europäisches Patentamt
European Patent Office
Office européen des brevets

(11) **EP 2 208 145 B1**

(12) **EUROPEAN PATENT SPECIFICATION**

(45) Date of publication and mention
of the grant of the patent:
**07.12.2016 Bulletin 2016/49**

(21) Application number: **08850021.0**

(22) Date of filing: **20.10.2008**

(51) Int Cl.:
*G06F 17/00* (2006.01)       *G06F 15/16* (2006.01)
*H04N 1/00* (2006.01)        *H04L 29/08* (2006.01)

(86) International application number:
**PCT/US2008/080466**

(87) International publication number:
**WO 2009/064585 (22.05.2009 Gazette 2009/21)**

(54) **METHOD AND APPARATUS FOR MODIFYING A USER PREFERENCE PROFILE**

VERFAHREN UND VORRICHTUNG ZUR ÄNDERUNG EINES BENUTZERPRÄFERENZPROFILS

PROCÉDÉ ET APPAREIL DE MODIFICATION DE PROFIL DE PRÉFÉRENCE D'UTILISATEUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.11.2007 GB 0722041**

(43) Date of publication of application:
**21.07.2010 Bulletin 2010/29**

(73) Proprietor: **Motorola Mobility LLC
Libertyville, IL 60048-5343 (US)**

(72) Inventors:
• **RIBIERE, Myriam,
F-91620 Nozay, XX (FR)**
• **PICAULT, Jerome,
91300 Massy (FR)**

(74) Representative: **Jepsen, René Pihl
Eltima Consulting
Grove House, Lutyens Close
Chineham Court
Basingstoke, Hampshire RG24 8AG (GB)**

(56) References cited:
EP-A2- 1 770 706       KR-A- 20040 044 657
US-A- 6 078 740        US-A1- 2001 037 407
US-A1- 2001 047 349    US-A1- 2006 100 987
US-B1- 6 195 651       US-B2- 6 490 587

## Description

## Field of the invention

The invention relates to modification of a user preference profile and in particular, but not exclusively, to the modification of a user preference profile for generating personalised recommendations for content items.

## Background of the Invention

In recent years, the availability and provision of multimedia and entertainment content has increased substantially. For example, the number of available television and radio channels has grown considerably and the popularity of the Internet has provided new content distribution means. Consequently, users are increasingly provided with a plethora of different types of content from different sources. In order to identify and select the desired content, the user must typically process large amounts of information which can be very cumbersome and impractical.

Accordingly, significant resources have been invested in research into techniques and algorithms that may provide an improved user experience and assist a user in identifying and selecting content, personalizing services etc.

In order to enhance the user experience, it is advantageous to personalise the operation to the individual user as much as possible. The process of generating recommendations requires that user preferences have been captured so that they can be used as input data by the recommendation application. Accordingly, many applications use a user preference profile to customize the operation for the specific user. In order to provide efficient and accurate user customisation it is essential that the user preference profile provides an accurate record of the user's preferences.

In many applications, the recommendations are generated independently by individual devices. However, such an approach requires that each individual device comprises the required functionality and results in the user preference profile being determined based only on the user interaction with the individual device. This is suboptimal for many systems, and in particular for systems wherein a coherent and seamless user experience is sought to be provided over a range of different devices.

Accordingly, it has been proposed to centrally derive and store the user preference profile such that this can be used by a plurality of different applications and devices.

Specifically, it is expected that in the future users may have a proliferation of devices at hand, varying in size from hand-held personal devices to desktop computers and even 'yard-scale' shared devices. Each device will be designed for specific user contexts and provide means for controlling the environment, accessing services and retrieving information. This movement towards a large number of context-aware devices that continuously interact with their users is commonly called ubiquitous computing.

Although the vision of ubiquitous computing is not yet fully incorporated in our daily lives, the physical and the virtual world have already become closely connected: travellers plan their trip ahead using online information and receive updated schedules on the road, businessmen monitor the news, for instance related to the stock market, while travelling etc. At the moment, most of these activities are performed using a personal computer but it is expected that such services increasingly will be provided by different devices including mobile phones, portable computers etc. Eventually, it is expected that users will be able to satisfy their information needs immediately and in effect will experience a continuous interaction with the virtual world of services, tools and information. As a result, their movement through the virtual world will be closely connected to their movement through the real, physical world.

As the various devices will differ in interaction means, the interface needs to be adapted to the device characteristics as well as to the context in which the devices are used. Users will furthermore expect the various devices to work together and will demand continuity of interaction. For example, a multi-platform migration service that allows a user to interact with an application through different devices may be desired by users.

In such an environment, it is useful to provide a centralised user preference profile which can be accessed by any of the user's devices or applications. However, in order to generate and maintain an accurate user preference profile, it is critical that accurate user preferences are detected and stored.

The generation and management of a user preference profile is typically based on explicit or implicit user feedback.

Explicit user feedback requires that users explicitly provide feedback by, for example, selecting and rating content items or answering questions about their interests. Such feedback may provide an accurate reflection of the user's preferences but requires users to engage in additional activities beyond their normal user interaction with the application(s).

In order to avoid this, implicit feedback techniques may be employed. These techniques obtain information about users by monitoring their natural interactions with the system. Depending on the content items and applications, sources of implicit feedback may e.g. include monitoring of reading time, saving actions, printing actions, content selection actions etc.

Implicit measures are generally thought to be less accurate than explicit measures, but as large quantities of implicit data can be gathered at no extra cost to the user, they are attractive alternatives. Implicit measures can also be combined with explicit ratings to obtain a more accurate representation of interests. For example, an initial user preference profile can be generated based on explicit user feedback and this initial user preference profile can then be continually updated and customised based on implicit user feedback.

However, in a diversified heterogeneous environment wherein a user preference profile is used with a large variety of different devices and applications, the implicit user feedback may also be disparate and non-homogenous and this may impede an accurate determination of the user preference thereby resulting in a distortion of the user preference profile. For example, the implicit data which best reflects the underlying user preferences typically depends strongly on the application and its context. Therefore, updating the user preference profile based on conventional user feedback (such as a reading time or a saving frequency) can result in the generated user preference profile depending on which devices the user has been using rather than the actual preference for the individual content itself.

Document US 2001047349 discloses digital content distribution by selecting subset of contents from central database based on aggregate profile of endpoint servers. Information received from users are processed to generate an aggregate profile of the endpoint server, which represents characteristics and preferences of the users. A central server selects a subset of contents from a central database, based on the generated aggregate profile, and stores the selected subset of contents in an endpoint database.

Hence, an improved system for determining a user preference profile would be advantageous and in particular a system allowing increased flexibility, facilitated implementation, reduced complexity, improved suitability for diverse usage environments, improved suitability for use with a plurality of heterogeneous devices and/or improved performance would be advantageous.

**Summary of the Invention**

Accordingly, the Invention seeks to preferably mitigate, alleviate or eliminate one or more of the above mentioned disadvantages singly or in any combination.

According to an aspect of the invention there is provided a user preference profile apparatus comprising: means for receiving preference indications from a plurality of devices having different device characteristics, the received preference indications being implicit preference indications reflecting user actions for content items associated with an application; relation means for providing at least one device dependent relation for at least a first device of the plurality of devices, the device dependent relation defining a calculation of a device content item preference as a function of a set of preference indicators for the first device, each preference indicator of the set of preference indicators representing preference indications having a characteristic meeting a criterion; preference means for generating a first device content item preference for a first content item and the first device in response to received preference indications for the first content item from the first device and the device dependent relation for the first device; and user preference profile means for modifying the user preference profile in response to the first device content item preference.

The invention may allow an improved user preference profile to be generated and/or may facilitate implementation. In particular, a low complexity determination of a user preference profile may be achieved. The invention may e.g. allow improved user preference determination based on implicit user feedback. The invention may e.g. allow improved user preference determination based on user feedback from a plurality of diverse devices. Specifically, a non-device specific user preference profile may be generated based on device dependent user preference indications received from a plurality of devices having different device characteristics. The invention may in particular allow an improved user preference profile to be generated for a seamless heterogeneous content distribution system.

The modifying of the user preference profile may include generating a new user preference profile, e.g. based on a standard or default user preference profile.

According to another aspect of the invention there is provided a system for modifying a user preference profile, the system comprising: a plurality of devices having different device characteristics, each device of the plurality of devices comprising: means for executing a content item application, means for generating preference indications being implicit preference indications reflecting user actions for content items associated with the content item application, means for transmitting the preference indications to a user preference profile server; and

the user preference profile server comprising: means for receiving preference indications from the plurality of devices; relation means for providing at least one device dependent relation for at least a first device of the plurality of devices, the device dependent relation defining a calculation of a device content item preference as a function of a set of preference indicators for the first device, each preference indicator of the set of preference indicators representing preference indications having a characteristic meeting a criterion; preference means for generating a first device content item preference for a first content item and the first device in response to received preference indications for the first content item from the first device and the device dependent relation for the first device; and user preference profile means for modifying the user preference profile in response to the first device content item preference.

According to another aspect of the invention there is provided a method of modifying a user preference profile, the method comprising: receiving preference indications from a plurality of devices having different device characteristics, the received preference indications being implicit preference indications reflecting user actions for content items associated with an application;

providing at least one device dependent relation for at least a first device of the plurality of devices, the device dependent relation defining a calculation of a device content item preference as a function of a set of preference indicators for the first device, each preference indicator of the set of preference indicators representing preference indications having a characteristic meeting a criterion; generating a first device content item preference for a first content item and the first device in response to received preference indications for the first content item from the first device and the device dependent relation for the first device; and modifying the user preference profile in response to the first device content item preference.

These and other aspects, features and advantages of the invention will be apparent from and elucidated with reference to the embodiment(s) described hereinafter.

**Brief Description of the Drawings**

Embodiments of the invention will be described, by way of example only, with reference to the drawings, in which

FIG. 1 is an illustration of an example of a content item system in accordance with some embodiments of the invention;

FIG. 2 is an illustration of an example of a device of the content item system of FIG. 1;

FIG. 3 is an illustration of an example of a user profile server in accordance with some embodiments of the invention;

FIG. 4 is an illustration of an example of elements of a user profile server in accordance with some embodiments of the invention;

FIG. 5 is an illustration of an example of a user profile server in accordance with some embodiments of the invention;

FIG. 6 illustrates a method of modifying a user preference profile in accordance with some embodiments of the invention.

**Detailed Description of Some Embodiments of the Invention**

The following description focuses on embodiments of the invention applicable to an information filtering system wherein text document content items may be presented and consumed by a user based on his user preference profile. However, it will be appreciated that the invention is not limited to this application but may be applied to many other systems, applications and types of content items.

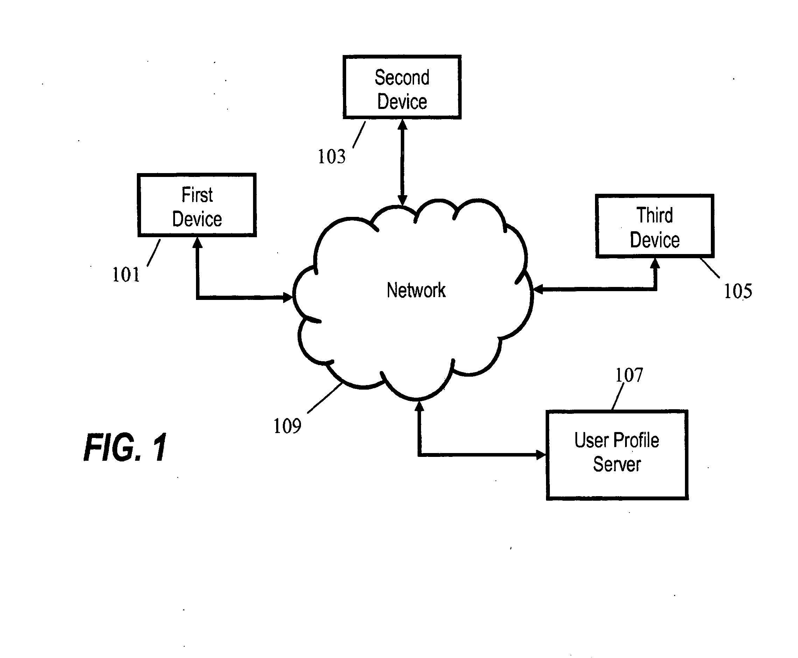

FIG. 1 illustrates an example of a content item distribution and processing system in accordance with some embodiments of the invention.

In the example, a first, second and third device 101, 103, 105 is coupled to a user profile server 107 by a network 109. The devices 101-105 are different devices used by the same user to access one more applications for processing, presenting, retrieving, storing etc content items.

The content items may for example be video clips, audio clips, television programmes, ebooks, digital pictures etc. The system will in the following be described with reference to an specific exemplary application that performs information retrieval based on text document content items.

The different devices 101-105 have different device characteristics and are typically used by the user in different user contexts. For example, the first device 101 may be a portable computer, the second device 103 may be a fixed (e.g. a home or office) desktop computer and the third device 105 may be the user's mobile phone.

In the system, a given application providing a user service may be executed from any of the devices 101-105. For example, text document information retrieval may be provided to the user independently of which of the devices 101-105 he is currently using. For example, a centralised information retrieval application may be executed in the network 109, the user profile server 107 or elsewhere and may be accessed from each of the devices 101-105. As another example, each of the devices 101-105 may comprise local processing functionality for providing an information retrieval process. Thus, the information retrieval application may be a distributed application which is independently executed in each of the devices 101 -105.

In the system, the user profile server 107 generates, maintains and stores a user preference profile for the user of the devices 101-105. This user preference profile can be used to customize and personalize various characteristics and aspects of the system including applications executed by or for the individual devices 101-105, other applications executed by other functional entities, characteristics of communication services and/or user interface characteristics etc. Thus, the user preference profile stored in the user profile server 107 is a generic user preference profile for the user that can be used for many different applications, services and purposes.

In order to generate and continuously adapt the user preference profile to more accurately reflect the users current preferences, the user profile server 107 is arranged to generate and adapt the user preference profile in response to user feedback for content items which have been provided to the user via any of the devices 101 -105. Specifically, in order to generate a significant amount of feedback data without imposing additional requirements and inconvenience to the user, the devices 101-105 are arranged to generate implicit user feedback and transmit this to the user profile server 107. The user profile server 107 is operable to modify the user preference profile for the user depending on this implicit user feedback.

Specifically, for an information filtering system such as that illustrated in FIG. 1, the users interests and preferences for information may change slowly over time as conditions, goals and knowledge change. Such information interests have been found to lead people to engage in relatively passive forms of information-seeking behaviour, such as having texts brought to their attention, and are therefore suited to the use of customisation of the user preference profile based on implicit rather than explicit feedback.

Typical steps for an information filtering system include the following:

- Representation of user's long term preferences or periodic goals or desires in a user preference profile.
- Comparison of the user preference profile and content representation for possible content to be recommended for the user, leading to the selection of possible relevant retrieved content. The content representation may use any suitable form and typically characterising meta-data is associated with each content item. Content representation techniques e. g. range from using indexes, vector representation or matrices, to the more modern representation of neural networks and semantic networks. The comparison mechanisms used are dependent on the underlying representations applied in the system and various comparison algorithms or criteria will be known to the skilled person.
- The retrieved content is provided to the user and is evaluated or consumed.
- The user provides explicit or implicit feedback based on the evaluation or use of the retrieved content leading to some modification of the user preference profile. This modification process is often referred to as Relevance Feedback. Thus, to improve the performance of the information filtering system, a feedback mechanism is incorporated. E.g. the user can state his satisfaction or dissatisfaction with returned content (explicit feedback) or the system can observe user behaviour and implicitly obtain this feedback. When receiving the feedback, the user preference profile is usually modified to obtain better results.

Thus, the information filtering/retrieval system of FIG. 1 seeks to estimate how relevant the user finds each content item presented by a filtering algorithm. This relevance feedback helps the system refine the user preferences over time. If the preferences can be accurately predicted, the system will be able to recommend content items with high estimated relevance at the expense of content items which are less relevant to the specific user.

However, a problem in systems such as that illustrated in FIG. 1 is that the user action and implicit feedback may depend heavily on which of the devices is currently used to access the application by the user. Thus, the same user action may have very different preference associations depending on the device used.

For example, in information retrieval, the main technique used for refining the user preference profile to enhance results is the relevance feedback. Implicit feedback is based on various implicit feedback indicators that can vary from one application to another. The implementation of this technique is highly dependent of the application, and indicators are typically determined empirically.

In a system wherein users may have a proliferation of devices at hand, varying in size from hand-held personal devices to desktops, the application is preferably accessible from a diversity of devices. For example, it is envisaged that the user may seamlessly begin to use an application on a desktop computer and then continue to use the application using a mobile device. In such a case, the same application will have different interfaces as each interface is preferably specifically adapted to the individual user device.

However, this variety of interfaces for a single application leads to different types of user behaviour when consuming content. For example while reading a news item on a mobile phone, a user can be disturbed by a phone call, or by the direct environment (e.g. too noisy to hear an audio stream). In that case the time the user has spent consuming the content is not a very relevant or accurate measure of the user's underlying preference for the content item itself but is more an indication of the used device/ context. Therefore, implicit feedback indicators may vary substantially from one device to another, even when the same application is used.

Although some systems have addressed this problem by generating, maintaining and storing individual device specific user preference profiles in the individual device, it is in many situations preferable to generate a common non-device specific user preference profile that can be used by many different applications, services and personalisation purposes. Furthermore, such a user preference profile can typically be substantially more accurate than individual device specific user preference profiles as the common user preference profile can be based on implicit user feedback from all the user's devices and therefore can be based on a larger data sample.

In the system of FIG. 1, the user profile server is operable to generate and adapt a device non-specific user preference profile based on device specific implicit user feedback. Specifically, the user profile server 107 is operable to process the received user feedback in response to device specific relations in order to generate non-device specific preferences used to modify the user preference profile.

Specifically, the user profile server 107 is able to flexibly process the received user feedback to take into account how and where the individual user feedback was generated. In addition, the user profile server 107 is also operable to automatically and dynamically adapt and select which user preference feedback should be considered and which user preference feedback should be ignored for individual devices.

For each device supported by the application the user profile server 107 provides a dedicated engine in order to interpret the specific user implicit feedback from each device before this is used to update the user preference profile. Each engine can e.g. interpret usage logs in different ways, based on e.g. the application interface and functionalities available at the specific device.

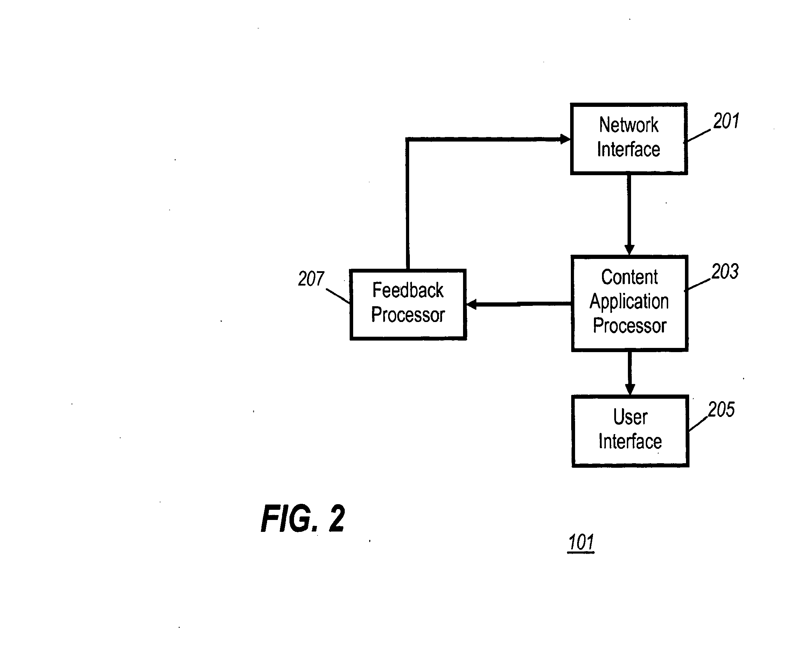

FIG. 2 illustrates one of the devices 101-105. Although the figures specifically illustrate the first device 101, it will be appreciated that the second device 103 and the third device 105 may have similar or identical functionality.

The device 101 comprises a network interface 201 which couples the first device 101 to the network 109. It will be appreciated that in different embodiments, the network 109 may be implemented by different communication means and that the network interface 201 of the specific embodiment will depend on the characteristics and requirements of the network 109. For example of the network 109 may include a mobile cellular communication system, a wireless local area network, the Internet etc.

The network interface 201 is coupled to a content application processor 203 which is further coupled to a user interface 205. The content application processor 203 operates the content application which in the specific example is an information filtering and retrieval application for text documents. In the example, the information filtering and generation of recommendations is itself performed by a remote server (which could e.g. be the user profile server 107) and the content application processor 203 is merely arranged to communicate with the remote server in order to request the received text document recommendations. The content application processor 203 is furthermore arranged to provide the recommendations to the user interface 205 for presentation to the user and to select and present the specific text documents that are requested by the user by the user interface 205.

The device 101 furthermore comprises the feedback processor 207 which is coupled to the content application processor 203 and which continuously monitors the user actions and specifically which content is consumed by the user as well as characteristics of this consumption.

The feedback processor 207 is furthermore arranged to generate preference indications which are implicit preference indications that reflects the user actions for the content items associated with the content item application executed by the content application processor 203. For example, the feedback processor 207 may monitor every time a content item is selected and generate a preference indication reflecting that this content item has been selected by the user. As another example every time a text document is printed, the feedback processor 207 can detect this and generate a preference indication reflecting that the text document has been printed. Other preference indications may for example be generated every time a text document is saved, deleted or copied. Furthermore, preference indications may be generated that indicates e.g. how much time a user has spent consuming the content item, e.g. for how long a text document has been displayed on the display of the device 101.

Thus, the preference indications generated by the feedback processor 207 are implicit preference indications that reflect the user actions associated with the manipulation and processing of the content items. Accordingly, no explicit dedicated interaction with the user is required in order to generate these preference indications.

The feedback processor 207 is furthermore coupled to the network interface 201 allowing the generated preference indications to be transmitted to the user profile server 107 via the network 109.

It will be appreciated that in some embodiments, each preference indication may be transmitted to the user profile server 107 when it is generated whereas in other embodiments a plurality of preference indications may be transmitted together. For example, in some embodiments, preference indications may be transmitted together in the form of user action log.

In the system, all three devices 101-105 generate preference indications based on the user behaviour. However, identical types of preference indications, for example an indication of a time spent reading a text document or that the document has been printed, provide different indications of the user's preference depending on the specific device used. For example, a user interface for an application may be limited such that it has different functionalities for a mobile device than for a desktop device resulting in different reflections of the underlying preference. For example, whereas printing may be a trivial action in a desktop environment it may be a cumbersome or impractical action in a mobile environment, and accordingly a printing performed for a mobile device may indicate a much higher user preference for a given text document than a printing performed for a desktop computer. The user may also use the application differently depending on the context. For example, for a mobile phone device a user may be disturbed by a phone call while reading a news item. As another example, the user may be affected by the direct environment such as e.g. if it is too noisy to hear an audio stream.

Thus, the level of user preference provided by a given user preference indication not only depends on the action itself but also depends on the device on which the action is performed. In the system of FIG. 1, the user profile server 107 takes this into account when updating the user preference profile.

Specifically, the user profile server 107 not only collects implicit feedback on consumed content from different devices but also adapts the implicit feedback mechanisms for each type of device. Each different mechanism allows an appropriate evaluation of the preference impact of content consumed on each particular device. The collection of implicit feedback for content from different devices is then used to update the user preference profile.

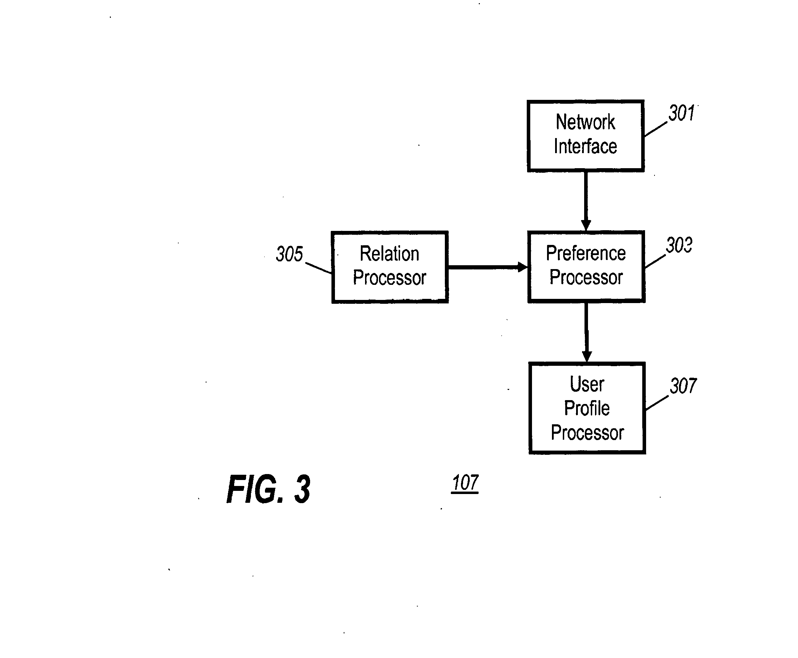

FIG. 3 illustrates elements of the user profile server 107.

The user profile server 107 comprises a network interface 301 which is operable to interface the user profile server 107 to the network 109. It will be appreciated, that the exact functionality of the network interface 301 depends on the nature of the network 109 for the specific embodiment and may for example include cellular communication system functionality, WLAN functionality, Internet broadband connection functionality etc.

The network interface 301 is specifically arranged to receive preference indications from the devices 101-105.

The network interface 301 is coupled to preference processor 303 which is capable of processing the received preference indications in order to generate user preferences for individual content items. For example, for a given content item the preference processor 303 can collect all the received preference indications from one device 101. These preference indications may then be processed in a device specific manner in order to generate a preference value for the content item which is (at least partially) compensated for the device specific impact.

Specifically, the preference processor 303 can generate a content item preference for a first content item and the first device based on the received preference indications for the first content item from the first device. However, rather than just generating the content item preference using a common default algorithm or function, the preference processor 303 generates the content item preference using a device specific mechanism for the first device. Specifically the content item preference for the first device is generated using a stored device dependent relation for the first device.

Accordingly, the preference processor 303 is coupled to a relation processor 305 which stores a device dependent relation for each of the devices 101-105. Each of the device dependent relations defines a calculation of a device content item preference as a function of a set of preference indicators for the first device. Each preference indicator of the set of preference indicators represents preference indications having a characteristic meeting a criterion.

Thus, the device dependent relation defines how the received preference indications should be combined to calculate the content item preference for a given content item (and device). The calculation is expressed by defining how preference indicators that match a given criterion should be treated. For example, the criterion may reflect the user action, i.e. one preference indicator may represent all preference indications that reflect that a "save" operation has been performed and the device dependent relation can define how such preference indications should be included.

Thus, the term preference indicator may be considered the generic term or variable name that is used for the predetermined specification of how the preference indications should be treated when received. Thus, the term preference indication may be considered to represent the actual received instances of the preference indicators, i.e. the actual specific data that is received from the devices 101-105 and used as an input to the device dependent relation when calculating a content item preference.

As a simple example, a device dependent relation may be given as:

$$P = \alpha \cdot \sum_i X_i + \beta \cdot \sum_j Y_j$$

where X and Y are the preference indicators that have characteristics meeting a given criterion for each indicator. Thus X and Y are the preference indicators that are replaced by the actual received preference indications when a content item preference is calculated. As the preference indicators may reflect a plurality of received preference indications (e.g. more than one preference indication may be received reflecting that a "save" operation has been performed), the formula includes a summation of the individual received preference indications represented by the indices i and j respectively for X and Y. Furthermore, the weighting of each indicator is represented by the scalar factors $\alpha$ and $\beta$ (which specifically may meet the requirement $\alpha+\beta=1$).

The criterion defining a specific preference indicator can be selected based on the specific preferences of the individual embodiment, and it will be appreciated that any suitable criteria can be used without detracting from the invention.

For example, in some embodiments, the preference indicators may define individual types or categories of preference indications, such as "all preference indications indicating a user save action", "all preference indications indicating a user delete action", "all preference indications indicating a user print action" etc.

It will also be appreciated that in some embodiments the different preference indicators may be complementary and disjoint such that a given preference indication can only correspond to one preference indicator. However, in other embodiments, a more flexible approach may be used and the preference indicators may have overlapping criteria. Thus, in some embodiments a given preference indication may be considered more than once if it matches the criterion of more than one preference indicator in the device dependent relation.

As a simple example, the device dependent relation may define a function wherein the content item preference is generated by allocating a preference contribution value associated with each possible type of preference indication (e.g. a preference indication reflecting that a content item has been selected may be given a preference value of 1, a preference indication reflecting that a save has been performed may be given a preference value of 2, a preference indication reflecting that a printing has been performed may be given a preference value of 5 etc for a mobile device whereas the same preference values may be 1, 1 and 1 for a desktop device). Thus, a preference indicator is defined for each possible type of preference indication and a preference value has been defined for each preference indicator. The device dependent relation may then define that the content item preference is to be generated simply by summing the preference values for the preference indications received within a given time interval.

The preference processor 303 is coupled to a user profile processor 307 which is arranged to modify the user preference profile in response to the content item preference(s) generated by the preference processor 303. It will be appreciated that any suitable method of modifying a user preference profile based on the preference value generated for a content item may be used. As a simple example, if the preference value exceeds a given threshold, the preference of the user preference profile for all properties and categories associated with the content item may be incremented. The incrementation step may for example be proportional to the preference value.

It will be appreciated, that typically the user profile server 107 receives preference indications from all the devices 101-105. Content item preferences may accordingly be generated as previously described for each of the devices 101-105. The user preference profile is then updated based on all the received preference indications from all devices 101-105.

Each device providing a preference indication may also provide a device indication which allows an identification of the device originating the preference indication. Such a device indication may for example be provided as explicitly transmitted data or may be implicitly provided as the source address for any data packets transmitted to the user profile server 107 containing preference indications.

The preference processor 303 may then use this device indication to select the device dependent relation stored in the relation processor 305 for that device. Thus, the preference processor 303 divides the received preference indications into groups containing the preference indications from one device and then selects the appropriate device dependent relation for each group.

Thus, the user profile server 107 implements an efficient mechanism for taking specific device characteristics into account in order to generate a more accurate device non-specific user preference profile.

It will be appreciated, that the device dependent relation may be dependent on a characteristic of the device. For example, the device dependent relation may depend on a characteristic of the user interface for the corresponding device. E.g. if the device has a small display, the selection of a large image that can only be viewed partially on the display will have a higher weighting than for a device having a large display which can show the whole image thereby reflecting that the user must have a high interest in the image in order to be interested in viewing it on the small display.

As another example, the device dependent relation may depend on a context of the device. This context may be a specific, current context dynamically determined by the device and communicated to the user profile server 107. As another example, the context may be a typical or potential user context for the device. For example, it may be assumed that a user accessing text documents at a desktop computer will be in a controlled environment wherein it is typically possible for the user to completely focus on the present content item. In contrast, for a mobile device it may be assumed that the user is not in a controlled environment but may be frequently interrupted. Accordingly, the device dependent relations may define that a time spent consuming the content may be given more consideration for a desktop device than for a mobile device.

As yet another example, the device dependent relation(s) may be dependent on a characteristic of the application processing or accessing the content items. For example, a preference indication generated for a "read" user action may be weighted lower for a text document retrieval application than for a music playing algorithm reflecting that all text documents of interests to the user are likely to be selected for reading whereas a reading action (of e.g. lyrics or background) for a music item is likely to only be performed for music items of very high interest to the user.

In the specific example, the preference processor 303 performs a two-stage process and the device dependent relations define at least two steps. Specifically, the device dependent relations define a function which is applied to each individual received preference indication in order to generate a modified preference indication. Thus, in the first stage each received preference indication is separately and individually modified to compensate for device specific characteristic.

For example, each individual preference indication indicating a specific user action may be translated into a modified preference indication given as a scalar preference value. As a specific example, the scalar preference value may be an integer from 1 to 5 where higher values indicate higher preferences for the content item. Thus, each received preference indication for a user action is converted into a modified preference indication value in accordance with the definition being provided in the device dependent relation.

In the second stage the generated modified preference indications are then combined into a content item preference for the specific content item and device. This combination can furthermore be device dependent and can thus be used to compensate for the device specific characteristics. The function used to combine the modified preference indications may thus also be defined by the device dependent relation for the device.

For example, the device dependent relation may specify that if more than a given number of specific user actions are reported by the received preference indications from the device, the weighting of these should be reduced. E.g. if a large number of text documents were printed from a mobile device, this may be more indicative of the mobile device currently having easy access to a printer and accordingly the printing action is likely to reflect a lower preference than in normal circumstances where printing is not easily available.

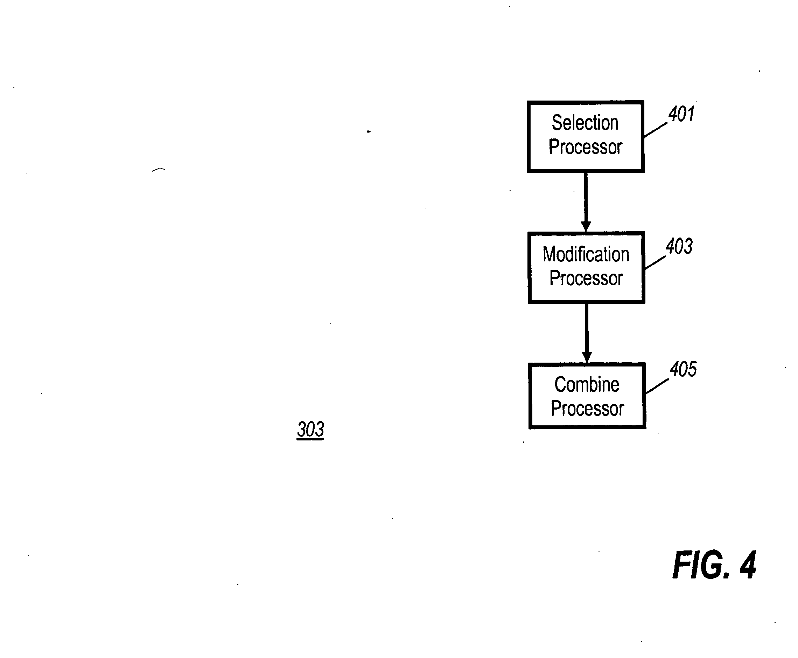

FIG. 4 illustrates some elements of the preference processor 303 for an example wherein the device dependent relations define at least two steps.

In the example, the device dependent relation for each device comprises a set of device dependent preference modification relations each of which defines a calculation of a single modified preference indication as a function of a single preference indicator from the device. Specifically, for each possible type of preference indication, the device dependent relation contains the definition of how that type of preference indication should be converted into a modified preference indication in order to provide a compensation for a device specific characteristic for the device.

For example, for each possible user action that may be reported by a preference indication, a preference modification relation may be stored indicating a preference value that should be assigned as a modified preference indication.

The preference processor 303 comprises a selection processor 401 which selects the appropriate preference modification relation for each received preference indication. For example, a characteristic of the provided indication is compared to the criteria for the defined preference indicators and the preference indicator(s) for which the criterion is met is selected. In this way the appropriate preference modification relation(s) defined for this specific type of indication is selected. The selection processor 401 thus selects the appropriate preference modification relation for each received preference indication dependent on an indication characteristic of the received preference indication. The indication characteristic can e.g. comprise a type of user action that is associated with the received preference indication. Thus, if the received preference indication is generated from a "Save" user action the preference modification relation defined for user "Save" is selected for that received preference indication.

The selection processor 401 is coupled to a modification processor 403 which receives the received preference indications and the associated preference modification relations. The modification processor 403 then proceeds to determine a modified preference indication for each received preference indication by applying the calculation defined in the individual preference modification relation to the received preference indication. Thus, the output of the modification processor 403 is a set of modified preference indications, such as a preference value, generated for each received preference indication.

The modification processor 403 is coupled to a combine processor 405 which is operable to determine a content item preference for the specific content and device by combining the modified preference indications generated by the modification processor 403.

In the specific example, the device dependent relation for each device also comprises a device dependent preference combination relation which defines a calculation of a combined modified preference indication as a function of the modified preference indications. Thus, the device dependent relation also includes a preference combination relation defining how the generated modified preference indications should be combined.

Thus, the combine processor 405 retrieves the preference combination relation for the specific device and applies this to the modified preference indications generated for the device. The resulting content item preference for the specific device is then fed to the user profile processor 107 where it is used to adapt the user preference profile for the user.

It will be appreciated that in some embodiments, the value resulting from the combination of the modified preference indications may be further processed in order to generate the content item preference.

It will be appreciated, that the described approach is typically applied individually to each content item and device pair, thereby generating a content item preference for each content item and device pair. The user preference profile is then dynamically adapted by this set of content item preferences.

In some embodiments the user profile server 107 may be arranged to receive explicit user preference input from the user and may be arranged to adapt the operation in response to the explicit user preferences.

Specifically, the user profile server 107 can generate a training set of content items which are presented to the user for review. For example, the user may be requested to specifically indicate his preference value for a number of content items that have previously been selected by the user.

In some examples, the explicit user preference indications can be used to modify the device dependent relations that are used to generate the content item preferences based on the implicit preference indications received from the devices. For example, the received explicit user feedback can be compared to the preference values that have been generated based on the implicit user feedback. If the two preference values deviate by more than a given amount, this can be considered as an indication that the device dependent relation is not sufficiently accurate.

E.g. if the user has indicated a significantly higher preference value for a given content item than calculated on the basis of the device dependent relations, the user profile server 107 can adjust the relations such that the resulting content item preference based on the implicit preference indications result in a preference value that more closely resembles the one explicitly provided by the user.

It will be appreciated that any suitable way of amending the device dependent relations may be used and that any combination of explicit preference values may be considered when amending the device dependent relations.

In the specific example the explicit user preference input is device independent and does not reflect the user's preference for the content item when accessed by any specific device but rather reflects the user's generic preference for the content item itself. Thus, a device independent explicit user preference input is used to adjust the device dependent behaviour of the system such that improved compensation for the device specific characteristics is achieved.

In some embodiments, the user profile server 107 is arranged to select a subset of preference indicators for at least one or more of the devices. Thus, in such embodiments, only some of the preference indications that may be received from the individual device are included when calculating the content item preference.

This subset of preference indications may be generated by selecting from a set of preference indicators that for example are not device dependent indicators but rather is a set of general preference indicators that the system can handle. For example, the user profile server 107 may be able to process a predetermined subset of preference indicators corresponding to user actions such as "save", "print", "select", "delete" etc. However, for one or more devices only some of these actions are considered whereas the others are ignored. E.g. some implicit feedback indicators may be excluded on a given device because, for example, there is no functionality for capturing the associated user action and/or metric (either because this is a voluntary limitation of the application on this device or because of intrinsic limitations due to the device's hardware capabilities).

In some embodiments, the set of preference indicators from which the subset is generated may be the set of possible indicators that can be generated by the individual device.

Thus, in the example where only some indicators are used, the user profile server 107 may for each device select a subset of implicit feedback indicators that are appropriate (or exclude the ones that are not relevant - which may be simpler) to a given device. The selection of the subset for the device may e.g. be done at design time of the application.

However, in some embodiments, the selection of the subset of preference indicators considered for the individual device may be dynamically adapted based on explicit user feedback. In such an example this subset may simply be selected in order to provide an improved correspondence between the preference values generated based on the implicit user feedback and the explicit user preference values provided by the user.

Thus, the user profile server 107 may request the user to evaluate content through explicit feedback. This interaction with the user can be proposed within a limited time interval and is used to determine the best implicit indicators for the user/device.

Thus, the user profile server can store the generated content item preferences that have been calculated for content items consumed within a given time interval (e.g. during a day). It can then request explicit user feedback for each device and/or can request device independent feedback and use this to select the subset.

The selection of the relevant implicit feedback indicators, i.e. the subset of preference indicators for a given device can be determined by any suitable algorithm such as the exemplary algorithm described in the following.

First, the algorithm evaluates the relevance of the implicit preference indicators by comparing the average mean error between the relevance values obtained through explicit feedback and relevance values obtained through the implicit feedback.

Then, an iterative process is initiated which starts with a single implicit feedback indicator. This indicator can be selected as the one resulting in the lowest average mean error for a single indicator. The algorithm can then add other indicators and for each new indicator can determine if this improves the mean average error or not. If the error is reduced, the indicator is included in the subset and otherwise it is excluded.

This approach may allow the user preference server 107 to reach a local optimum wherein the subset is selected to minimise the average mean error between the implicit feedback based preference values and the explicit preference values provided for the same content.

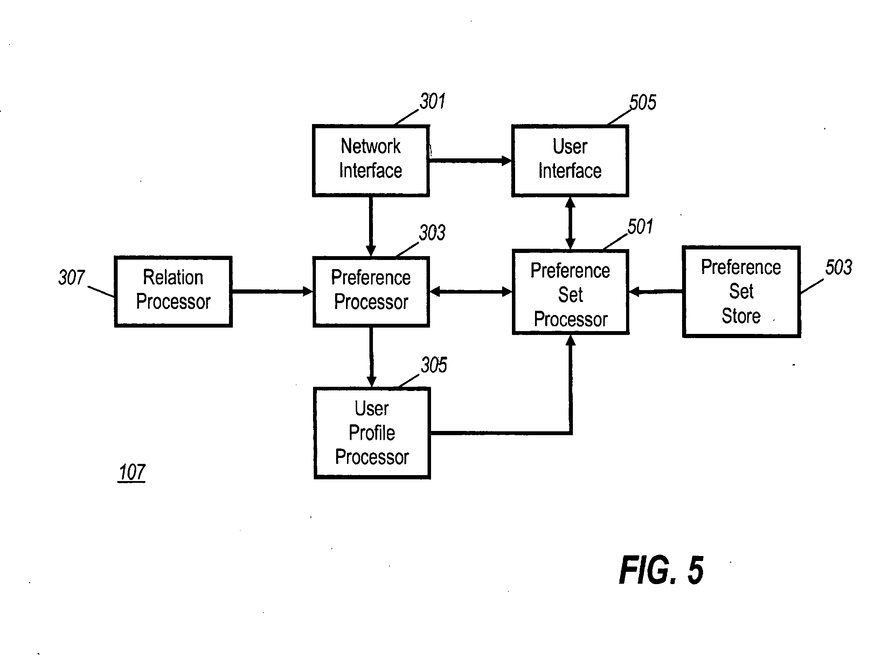

FIG. 5 illustrates an example of a user preference server 107 in accordance with such an example. In addition to the elements described with reference to FIG. 3, the user preference server 107 of FIG. 5 also comprises functionality for receiving explicit user feedback and for determining a subset of preference indicators for each device in response thereto.

In the example, preference processor 303 thus generates content item preferences for a plurality of content items and a plurality of devices.

In the example, the preference processor 303 is coupled to a preference set processor 501 which is arranged to select the upset of preference indications that should be considered for each individual device. In the example, the preference processor 303 is arranged to ignore any preference indications not meeting a criterion of at least one preference indicator included in the subset provided by the preference processor 501. The preference set processor 501 is furthermore coupled to a preference set store 503 which stores the subset of preference indicators for each device.

The user profile server 107 furthermore comprises a user interface 505 which is capable of interfacing with the user in order to retrieve explicit user feedback.

In the example, a number of content items are selected by the preference set processor 501 and explicit user preference values are requested from the user via the user interface 505. The received explicit user preference values are stored in the preference set processor 501. Thus, the user profile server 107 obtains explicit user preference values for some of the content items that have been consumed by the user through at least one of the devices. The preference set processor 501 then proceeds to select the preference indicators for the subset of a given device depending on the explicit user feedback.

In particular, the preference set processor 501 can control the preference processor 303 to generate evaluation device content item preferences for content items based on the calculation of the device dependent relation using only some indicators. Specifically, the preference set processor 501 can initially control the preference processor 303 to generate an evaluation content item preference for each training content item for which an explicit user preference has been provided, based on only a single preference indicator being included. Such evaluation content item preferences are generated for all possible preference indicators and an average mean error relative to the provided explicit user preferences is calculated. An initial subset is then generated which comprises only the single preference indicator that has the lowest average mean error.

The preference set processor 501 then selects the preference indicator which has the next lowest average mean error. The preference set processor 501 then controls the preference processor 303 to generate evaluation content item preferences for the subset (currently consisting only of the indicator having the lowest average mean error) and one additional preference indication (currently being the indicator having the next lowest average mean error). An average mean error for the evaluation content item preferences are then calculated by the preference processor 303, i.e. the evaluation content item preferences are compared to the explicit user preferences in order to generate an indication of how closely these match each other. It will be appreciated that any other suitable match criterion or measure than an average mean error may be used without detracting from the invention.

The preference set processor 501 then proceeds to determine whether to include the additional indicator in the subset or not depending on the comparison between the generated evaluation content item preferences and the explicit user preferences for the content items. Specifically, if the average mean error is reduced by the inclusion of the additional indicator, the indicator is included in the subset and otherwise it is excluded from the subset.

The preference set processor 501 then proceeds to select the preference indicator having the next lowest average mean error when considered alone. It then proceeds to determine evaluation content item preferences based on this indicator been included in the subset and proceeds to include the indicator in the subset if it results in a reduced average mean error. The process is repeated until all possible indicators have been considered thereby resulting in a subset of indicators that represents a local minimum of the generated average mean error.

It will be appreciated, that the subset of preference indicators can be considered by amending the device dependent relation stored in the relation processor 307 appropriately (e.g. by setting the weight for preference indicators not in the subset to zero) or equivalently can be considered by modifying the received preference indications appropriately (e.g. by deleting or ignoring any indications not matching any indicator included in the subset).

In the example, the explicit user preferences were provided directly to the user profile server 107 by a local user interface. However it will be appreciated that in other embodiments, the explicit user preferences may be obtained by an application running on one of the devices or through any other suitable means.

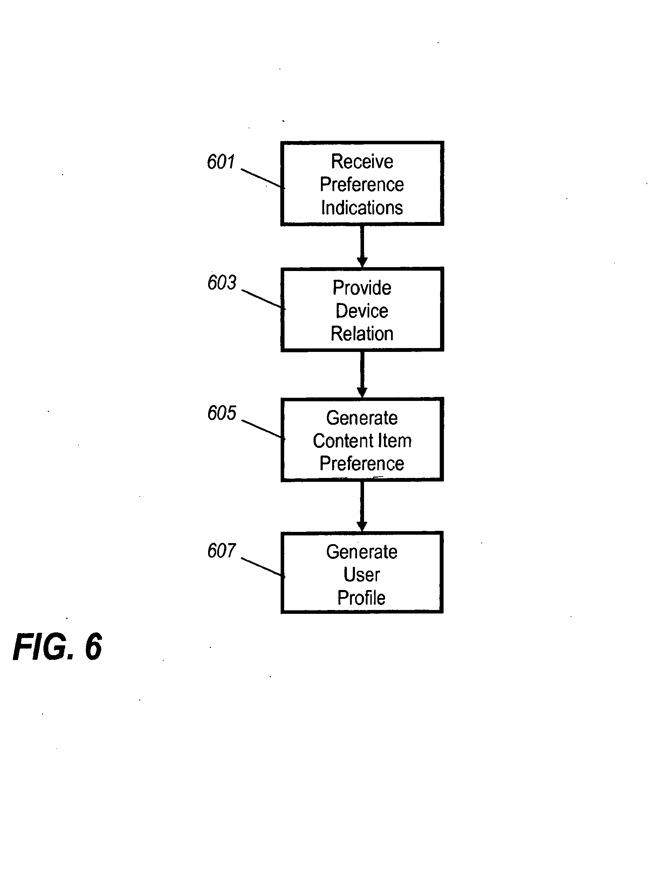

FIG. 6 illustrates a method of generating a user preference profile in accordance with some embodiment of the invention.

The method initiates in step 601 wherein preference indications are received from a plurality of devices having different device characteristics. The received preference indications are implicit preference indications reflecting user actions for content items associated with an application.

Step 601 is followed by step 603 wherein at least one device dependent relation for at least a first device of the plurality of devices is provided. The device dependent relation defines a calculation of a device content item preference as a function of a set of preference indicators for the first device. Each preference indicator of the set of preference indicators represents preference indications having a characteristic meeting a criterion.

Step 603 is followed by step 605 wherein a first device content item preference is generated for a first content item and the first device in response to received preference indications for the first content item from the first device and the device dependent relation for the first device.

Step 605 is followed by step 607 wherein the user preference profile is generated in response to the first device content item preference.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

**Claims**

1. A user preference profile apparatus comprising:

    means for receiving preference indications from a plurality of devices having different device characteristics, the received preference indications being implicit preference indications reflecting user actions for content items associated with an application;
relation means for providing at least one device dependent relation for at least a first device of the plurality of devices, the device dependent relation defining a calculation of a device content item preference as a function of a set of preference indicators for the first device, each preference indicator of the set of preference indicators representing preference indications having a characteristic meeting a criterion;
preference means for generating a first device content item preference for a first content item and the first device in response to received preference indications for the first content item from the first device and the device dependent relation for the first device; and
user preference profile means for modifying the user preference profile in response to the first device content item preference.

2. The user preference profile apparatus of claim 1 wherein the device dependent relation comprises a set of device dependent preference modification relations each defining a calculation of one modified preference indication as a function of one preference indicator.

3. The user preference profile apparatus of claim 2 wherein the preference means further comprises:

    means for, for at least some of the received preference indications from the first device for the first content item,

        selecting a preference modification relation from the set of device dependent preference modification relations in response to an indication characteristic of the received preference indication, and
        determining a received modified preference indication by applying a calculation defined by the selected preference modification relation to the received preference indication; and

    combining means for determining the first device content item preference in response to the received modified preference indication.

4. The user preference profile apparatus of claim 3 wherein the indication characteristic comprises a type of user action associated with the received preference indication.

**5.** The user preference profile apparatus of claim 3 wherein the device dependent relation comprises a device dependent preference combination relation for the first device defining a calculation of a combined modified preference indication as a function of modified preference indicators from the first device; each modified preference indicator representing modified preference indications having a characteristic meeting a criterion.

**6.** The user preference profile apparatus of claim 5 further comprising means for determining a received combined modified preference indication by applying the device dependent preference combination relation to the received modified preference indications; and the preference means is arranged to determine the first device content item preference in response to the received modified preference indication.

**7.** The user preference profile apparatus of claim 1 wherein the user preference profile means is arranged to modify the user preference profile in response to device content item preferences for a plurality of devices, at least some of the device content item preferences being determined in response to received preference indications for a content item from at least some of the plurality of devices and device dependent relations for the at least some of the plurality of devices.

**8.** The user preference profile apparatus of claim 1 wherein

the preference means is arranged to generate a device content item preference for each content item of a plurality of content items in response to received preference indications for each content item from the first device and the device dependent relation for the first device;

and further comprising:

means for receiving explicit user preference indications for at least some of the plurality of content items; and

means for modifying the device dependent relation in response to a comparison of the explicit user preference indications and the device content item preferences for the at least some of the plurality of content items.

**9.** The user preference profile apparatus of claim 8 wherein the explicit user preference indications are device independent.

**10.** A method of modifying a user preference profile, the method comprising:

receiving preference indications from a plurality of devices having different device characteristics, the received preference indications being implicit preference indications reflecting user actions for content items associated with an application;

providing at least one device dependent relation for at least a first device of the plurality of devices, the device dependent relation defining a calculation of a device content item preference as a function of a set of preference indicators for the first device, each preference indicator of the set of preference indicators representing preference indications having a characteristic meeting a criterion;

generating a first device content item preference for a first content item and the first device in response to received preference indications for the first content item from the first device and the device dependent relation for the first device; and

modifying the user preference profile in response to the first device content item preference.

**Patentansprüche**

**1.** Nutzerpräferenzprofilvorrichtung, umfassend:

Mittel zum Empfangen von Präferenzindikationen von einer Mehrzahl von Vorrichtungen mit unterschiedlichen Vorrichtungscharakteristika, wobei die empfangenen Präferenzindikationen implizite Präferenzindikationen sind, die Nutzeraktionen bezüglich Inhaltselementen reflektieren, welche mit einer Anwendung verknüpft sind;

Relationsmittel zum Bereitstellen wenigstens einer vorrichtungsabhängigen Relation für wenigstens eine erste Vorrichtung der Mehrzahl von Vorrichtungen, wobei die vorrichtungsabhängige Relation eine Berechnung einer Vorrichtungsinhaltselementpräferenz als eine Funktion eines Satzes von Präferenzindikatoren für die erste Vorrichtung definiert, wobei jeder Präferenzindikator aus dem Satz von Präferenzindikatoren Präferenzindikationen repräsentiert, die eine Charakteristik haben, welche ein Kriterium erfüllt;

Präferenzmittel zum Erzeugen einer ersten Vorrichtungsinhaltselementpräferenz für ein erstes Inhaltselement und die erste Vorrichtung in Reaktion auf empfangene Präferenzindikationen für das erste Inhaltselement von der ersten Vorrichtung und die vorrichtungsabhängige Relation für die erste Vorrichtung; und

Nutzerpräferenzprofilmittel zum Ändern des Nutzerpräferenzprofils in Reaktion auf die erste Vorrichtungsinhaltselementpräferenz.

2. Nutzerpräferenzprofilvorrichtung nach Anspruch 1, wobei die vorrichtungsabhängige Relation einen Satz von vorrichtungsabhängigen Präferenzveränderungsrelationen umfasst, wobei jede eine Berechnung von einer veränderten Präferenzindikation als eine Funktion von einem Präferenzindikator definiert.

3. Nutzerpräferenzprofilvorrichtung nach Anspruch 2, wobei die Präferenzmittel weiterhin umfassen:

für wenigstens einige der empfangenen Präferenzindikationen von der ersten Vorrichtung für das erste Inhaltelement, Mittel zum

Auswählen einer Präferenzveränderungsrelation aus dem Satz von vorrichtungsabhängigen Präferenzveränderungsrelationen in Reaktion auf eine Indikation, die für die empfangene Präferenzindikation charakteristisch ist, und
Bestimmen einer empfangenen veränderten Präferenzindikation durch Anwenden einer Berechnung, die durch die ausgewählte Präferenzveränderungsrelation definiert ist, auf die empfangene Präferenzindikation; und

Kombinationsmittel zum Bestimmen der Inhaltselementpräferenz der ersten Vorrichtung in Reaktion auf die empfangene veränderte Präferenzindikation.

4. Nutzerpräferenzprofilvorrichtung nach Anspruch 3, wobei die Indikationscharakteristik einen Typ einer Nutzerhandlung umfasst, die mit der empfangenen Präferenzindikation verknüpft ist.

5. Nutzerpräferenzprofilvorrichtung nach Anspruch 3, wobei die vorrichtungsabhängige Relation eine vorrichtungsabhängige Präferenzkombinationsrelation für die erste Vorrichtung umfasst, die eine Berechnung einer kombinierten veränderten Präferenzindikation als eine Funktion veränderter Präferenzindikatoren von der ersten Vorrichtung definiert; wobei jeder veränderte Präferenzindikator veränderte Präferenzindikationen repräsentiert, die eine ein Kriterium erfüllende Charakteristik aufweisen.

6. Nutzerpräferenzprofilvorrichtung nach Anspruch 5, die weiterhin Mittel zum Bestimmen einer empfangenen kombinierten veränderten Präferenzindikation durch Anwenden der vorrichtungsabhängigen Präferenzkombinationsrelation auf die empfangenen veränderten Präferenzindikationen aufweisen; wobei die Präferenzmittel eingerichtet sind, um die Inhaltselementpräferenz der ersten Vorrichtung in Reaktion auf die empfangene veränderte Präferenzindikation zu bestimmen.

7. Nutzerpräferenzprofilvorrichtung nach Anspruch 1, wobei die Nutzerpräferenzprofilmittel eingerichtet sind, um das Nutzerpräferenzprofil in Reaktion auf Vorrichtungsinhaltselementpräferenzen für eine Mehrzahl von Vorrichtungen zu verändern, wobei wenigstens einige der Vorrichtungsinhaltselementpräferenzen in Reaktion auf empfangene Präferenzindikationen für ein Inhaltelement von wenigstens einigen aus der Mehrzahl von Vorrichtungen und vorrichtungsabhängigen Relationen für die wenigstens einigen von der Mehrzahl von Vorrichtungen bestimmt sind.

8. Nutzerpräferenzprofilvorrichtung nach Anspruch 1, wobei
die Präferenzmittel eingerichtet sind, um eine Vorrichtungsinhaltselementpräferenz für jedes Inhaltselement aus einer Mehrzahl von Inhaltselementen in Reaktion auf empfangene Präferenzindikationen für jedes Inhaltselement von der ersten Vorrichtung und die vorrichtungsabhängige Relation für die erste Vorrichtung zu erzeugen;
weiterhin umfassend:

Mittel zum Empfangen expliziter Nutzerpräferenzindikationen für wenigstens einige aus der Mehrzahl von Inhaltselementen; und
Mittel zum Verändern der vorrichtungsabhängigen Relation in Reaktion auf einen Vergleich der expliziten Nutzerpräferenzindikationen und der Vorrichtungsinhaltselementpräferenzen für die wenigstens einigen aus der Mehrzahl von Inhaltselementen.

9. Nutzerpräferenzprofilvorrichtung nach Anspruch 8, wobei die expliziten Nutzerpräferenzindikationen vorrichtungsunabhängig sind.

10. Verfahren zum Verändern eines Nutzerpräferenzprofils, wobei das Verfahren umfasst:

Empfangen von Präferenzindikationen von einer Mehrzahl von Vorrichtungen mit verschiedenen Vorrichtungscharakteristika, wobei die empfangenen Präferenzindikationen implizite Präferenzindikationen sind, die Nutzerhandlungen für Inhaltselemente reflektieren, die mit einer Anwendung verknüpft sind;
Bereitstellen von wenigstens einer vorrichtungsabhängigen Relation für wenigstens eine erste Vorrichtung aus der Mehrzahl von Vorrichtungen, wobei die vorrichtungsabhängige Relation eine Berechnung einer Vorrichtungsinhaltselementpräferenz als eine Funktion eines Satzes von Präferenzindikatoren für die erste Vorrichtung definiert, wobei jeder Präferenzindikator aus dem Satz von Präferenzindikatoren, die Präferenzindikationen repräsentieren, welche eine ein Kriterium erfüllende Charakteristik aufweisen;

Erzeugen einer Inhaltselementpräferenz einer ersten Vorrichtung für ein erstes Inhaltselement und die erste Vorrichtung in Reaktion auf empfangene Präferenzindikationen für das erste Inhaltselement von der ersten Vorrichtung und die vorrichtungsabhängige Relation für die erste Vorrichtung; und

Verändern des Nutzerpräferenzprofils in Reaktion auf die Inhaltselementpräferenz der ersten Vorrichtung.

## Revendications

1. Appareil pour profils de préférences d'utilisateur comportant:

un moyen servant à recevoir des indications de préférences provenant d'une pluralité de dispositifs présentant des caractéristiques de dispositifs différentes, les indications de préférences reçues étant des indications implicites de préférences reflétant des actions d'utilisateur pour des éléments de contenu associés à une application;

un moyen de relation servant à mettre en place au moins une relation dépendant du dispositif pour au moins un premier dispositif de la pluralité de dispositifs, la relation dépendant du dispositif définissant un calcul d'une préférence d'élément de contenu de dispositif en fonction d'un ensemble d'indicateurs de préférences pour le premier dispositif, chaque indicateur de préférences de l'ensemble d'indicateurs de préférences représentant des indications de préférences présentant une caractéristique satisfaisant un critère;

un moyen de préférences servant à générer une première préférence d'élément de contenu de dispositif pour un premier élément de contenu et le premier dispositif en réponse à des indications de préférences reçues pour le premier élément de contenu provenant du premier dispositif et à la relation dépendant du dispositif pour le premier dispositif; et

un moyen de profil de préférences d'utilisateur servant à modifier le profil de préférences d'utilisateur en réponse à la première préférence d'élément de contenu de dispositif.

2. Appareil pour profils de préférences d'utilisateur selon la revendication 1, la relation dépendant du dispositif comportant un ensemble de relations de modification de préférences dépendant du dispositif définissant chacune un calcul d'une indication de préférences modifiées en fonction d'un indicateur de préférence.

3. Appareil pour profils de préférences d'utilisateur selon la revendication 2, le moyen de préférences comportant en outre:

un moyen servant, pour au moins une partie des indications de préférences reçues provenant du premier dispositif pour le premier élément de contenu,

à sélectionner une relation de modification de préférences dans l'ensemble de relations de modification de préférences dépendant du dispositif en réponse à une caractéristique d'indication de l'indication de préférences reçues, et à déterminer une indication de préférences reçues modifiées en appliquant à l'indication de préférences reçues un calcul défini par la relation sélectionnée de modification de préférences; et

un moyen de combinaison servant à déterminer la première préférence d'élément de contenu de dispositif en réponse à l'indication de préférences reçues modifiées.

4. Appareil pour profils de préférences d'utilisateur selon la revendication 3, la caractéristique d'indication comportant un type d'action d'utilisateur associé à l'indication de préférences reçues.

5. Appareil pour profils de préférences d'utilisateur selon la revendication 3, la relation dépendant du dispositif comportant une relation de combinaison de préférences dépendant du dispositif pour le premier dispositif définissant un calcul d'une indication de préférences modifiées combinée en fonction d'indicateurs de préférences modifiées provenant du premier dispositif ; chaque indicateur de préférences modifiées représentant des indications de préférences modifiées présentant une caractéristique satisfaisant un critère.

6. Appareil pour profils de préférences d'utilisateur selon la revendication 5, comportant en outre un moyen servant à déterminer une indication combinée de préférences modifiées reçues en appliquant la relation de combinaison de préférences dépendant du dispositif aux indications de préférences reçues modifiées ; et le moyen de préférences étant configuré pour déterminer la première préférence d'élément de contenu de dispositif en réponse à l'indication de préférences reçues modifiées.

7. Appareil pour profils de préférences d'utilisateur selon la revendication 1, le moyen de profil de préférences d'utilisateur étant configuré pour modifier le profil de préférences d'utilisateur en réponse à des préférences d'éléments de contenu de dispositifs pour une pluralité de dispositifs, au moins une partie des préférences d'éléments de contenu de dispositifs étant déterminée en réponse à des indications de préférences reçues pour un élément de contenu provenant d'au moins une partie de la pluralité de dispositifs et de relations dépendant des dispositifs pour au moins ladite partie de la pluralité de dispositifs.

8. Appareil pour profils de préférences d'utilisateur selon la revendication 1,
le moyen de préférences étant configuré pour générer une préférence d'élément de contenu de dispositif pour chaque élément de contenu d'une pluralité d'éléments de contenu en réponse à des indications de préférences reçues pour chaque élément de contenu provenant du premier dispositif et à la relation dépendant du dispositif pour le premier dispositif ; et comportant en outre:

un moyen servant à recevoir des indications explicites de préférences d'utilisateur pour au moins une partie de la pluralité d'éléments de contenu; et
un moyen servant à modifier la relation dépendant du dispositif en réponse à une comparaison des indications explicites de préférences d'utilisateur et des préférences d'éléments de contenu de dispositifs pour au moins ladite partie de la pluralité d'éléments de contenu.

9. Appareil pour profils de préférences d'utilisateur selon la revendication 8, les indications explicites de préférences d'utilisateur étant indépendantes du dispositif.

10. Procédé de modification d'un profil de préférences d'utilisateur, le procédé comportant les étapes consistant à:

recevoir des indications de préférences provenant d'une pluralité de dispositifs présentant des caractéristiques de dispositifs différentes, les indications de préférences reçues étant des indications implicites de préférences reflétant des actions d'utilisateur pour des éléments de contenu associés à une application;
mettre en place au moins one relation dépendant du dispositif pour au moins un premier dispositif de la pluralité de dispositifs, la relation dépendant du dispositif définissant un calcul d'une préférence d'élément de contenu de dispositif en fonction d'un ensemble d'indicateurs de préférences pour le premier dispositif, chaque indicateur de préférences de l'ensemble d'indicateurs de préférences représentant des indications de préférences présentant une caractéristique satisfaisant un critère;
générer une première préférence d'élément de contenu de dispositif pour un premier élément de contenu et le premier dispositif en réponse à des indications de préférences reçues pour le premier élément de contenu provenant du premier dispositif et à la relation dépendant du dispositif pour le premier dispositif; et
modifier le profil de préférences d'utilisateur en réponse à la première préférence d'élément de contenu de dispositif.

FIG. 1

**FIG. 2**

Network Interface — 201

Content Application Processor — 203

Feedback Processor — 207

User Interface — 205

101

EP 2 208 145 B1

**FIG. 3**   107

EP 2 208 145 B1

EP 2 208 145 B1

```
┌─────────────┐
│  Selection  │⟍ 401
│  Processor  │
└──────┬──────┘
       │
       ▼
┌─────────────┐
│Modification │⟍ 403
│  Processor  │
└──────┬──────┘
       │
       ▼
┌─────────────┐
│   Combine   │⟍ 405
│  Processor  │
└─────────────┘
```

303

FIG. 4

*FIG. 5*

601 — Receive Preference Indications

603 — Provide Device Relation

605 — Generate Content Item Preference

607 — Generate User Profile

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001047349 A